# EUROPÄISCHE PATENTSCHRIFT

(11) **EP 1 728 814 B1**
(45) Veröffentlichungstag und Bekanntmachung des Hinweises auf die Patenterteilung: **24.12.2008**
(21) Anmeldenummer: 06007483.8
(22) Anmeldetag: 10.04.2006
(51) Int. Cl.: C08J 3/00

(54) **Verfahren zum Herstellen von Nanopartikeln unter Verwendung poröser Membranen**
Process for the preparation of nanoparticles making use of porous membranes
Procédé de préparation des nanoparticules à base de membranes poreuses

(30) Priorität: 30.05.2005 DE 102005025057
(43) Veröffentlichungstag der Anmeldung: 06.12.2006
(73) Patentinhaber: GKSS-Forschungszentrum Geesthacht GmbH, 21502 Geesthacht (DE)
(72) Erfinder: Ebert, Katrin, Dr., 21339 Lüneburg (DE); Maltzahn, Bianca, 19260 Vellahn (DE); Just, Regina, 21502 Geesthacht (DE)
(74) Vertreter: Seemann, Ralph

(56) Entgegenhaltungen:
- US-A- 5 118 528

## Beschreibung

Die Erfindung betrifft ein Verfahren zum Herstellen von Nanopartikeln aus einem Polymer. Weiter betrifft die Erfindung polymere Nanopartikel, herstellbar aus einem Polymer. Ferner betrifft die Erfindung eine Verwendung einer porösen Membran in einem Verfahren zur Herstellung von polymeren Nanopartikeln sowie eine Vorrichtung zur Herstellung von polymeren Nanopartikeln. Schließlich betrifft die Erfindung die Verwendung von polymeren, wirkstoffbeladbaren und/oder wirkstoffbeladenen Nanopartikeln.

Zur Herstellung polymerer Nanopartikel im Labormaßstab sind bislang diverse Verfahren bekannt.

Eine Möglichkeit zur Herstellung von Nanopartikeln besteht in der Polymerisation von Monomeren. Dabei wird ein geeignetes Monomer in einer wässrigen Lösung einer oberflächenaktiven Substanz (Polymerisationsmedium) emulgiert. Durch die Zugabe eines Initiators oder Erhöhung der Temperatur unter starkem Rühren wird die Polymerisation gestartet und somit Nanopartikel gebildet.

Dieses Verfahren ist limitiert auf eine geringe Anzahl von geeigneten Polymeren und ausgeschlossen für natürliche oder semisynthetische Polymere. Des Weiteren ist es schwierig, das Molekulargewicht des entstandenen, die Nanopartikel bildenden Polymers zu kontrollieren. Außerdem müssen, insbesondere wenn ein biologischer Einsatz der Nanopartikel geplant ist, die verbleibenden Monomere und Oligomere sowie die überschüssigen Polymerisationsreagenzien (Initiator, Katalysator) entfernt werden, um eine Biokompatibilität zu gewährleisten. Die Aufreinigung ist daher meist aufwendig (Ultrazentrifugation, Dialyse).

Bei der Herstellung von Nanopartikeln mit Hilfe der RESS-Methode (Rapid Expansion of Supercritical Solution) wird das gewünschte Polymer in einer überkritischen Flüssigkeit gelöst. Diese Lösung wird anschließend mittels einer Düse entspannt, wodurch das Lösungsvermögen der überkritischen Flüssigkeit sinkt und das Polymer in Form von Nanopartikeln ausfällt. Diese Methode findet nur in wenigen Fällen Anwendung, da die meisten Polymere in überkritischen Flüssigkeiten schwer löslich sind. Insbesondere hochmolekulare Polymere sind in überkritischen Flüssigkeiten unlöslich.

Nur für hydrophile, geladene Polymere ist die Methode der ionischen Gelation geeignet. Hierbei reagieren in einer Mischung zwei wässrige Phasen, von denen die eine zum Beispiel das Polykation Chitosan und ein Di-Blockcopolymer aus Ethylenoxid und die andere ein Polyanion, zum Beispiel Natriumtripolyphosphat, enthält. Die Reaktion von Polykation und Polyanion führt zur Bildung von Nanopartikeln.

Bei der Sprühtrocknung wird eine Polymerlösung in einem heißen Luftstrom atomisiert. Dies führt zur Bildung kleinster Tröpfchen, aus denen das Lösemittel augenblicklich verdampft, wodurch sich Partikel bilden. Dabei entstehen überwiegend Partikel mit einem mittleren Durchmesser von >1 µm. Die Herstellung von Nanopartikeln mit einem mittleren Durchmesser von weniger als 500 nm aus einer Lösung ist nicht möglich. Es besteht die Möglichkeit, eine Nanopartikel enthaltende Suspension mittels Sprühtrocknung zu einem Nanopuder zu verarbeiten.

Die obigen Verfahren sind im Journal of Controlled Release (2001, 70, S. 1.20) veröffentlicht.

Eine etablierte Technik ist die Emulsions-Verdampfungs-Technik, die in US 4 177 177 A beschrieben ist. In diesem Verfahren wird eine Polymerlösung aus einem Polymer, das in einem nicht wasserlöslichen Lösemittel gelöst ist, in einer Emulgatoren enthaltenden wässrigen Phase emulgiert. Mit Hilfe von Ultraschall, Hochdruckhomogenisierer oder Mikroverflüssiger wird die Tröpfchengröße minimiert. Die sich anschließende Vakuumdestillation entfernt das Lösemittel und führt zur Bildung einer feinen wässrigen Dispersion aus Nanopartikeln. Bei der Entfernung des Lösemittels entsteht aus jedem Emulsionstropfen ein Partikel. Zum Herstellen von gleichmäßig kleinen Nanopartikeln ist daher eine intensive Homogenisierung verbunden mit hohem Energieaufwand notwendig.

Die Aussalz-Technik wurde als erstes in WO 88/08011 offen gelegt. Sie basiert auf der Trennung eines vollkommen wasserlöslichen Lösemittels wie Aceton von einer wässrigen Lösung per Aussalzeffekt. Üblicherweise ist das Polymer im Aceton gelöst. Diese Lösung wird in einem wässrigen, das Aussalz-Agens und einen Stabilisator enthaltenden Gel emulgiert. Anschließend wird diese Emulsion mit Wasser verdünnt, um die Diffusion des Acetons in die wässrige Phase zu beschleunigen und so die Bildung von Nanopartikeln zu induzieren.

Die Anwendung der Aussalz-Technik hängt ab von der limitierten Verfügbarkeit von Aussalz-Agenzien für eine Phasenseparation ohne Fällungseffekte und von löslichen Stabilisatoren, die kompatibel mit gesättigten wässrigen Lösungen sind und in Gegenwart des Lösemittels weder koazervieren (anhäufen) noch ausfallen. Weiterhin werden große Mengen Salz verwendet, was zu einer Festlegung des pH-Wertes der wässrigen Lösung führt. Das Salz muss im sich anschließenden Aufreinigungsschritt entfernt werden. Mit dieser Methode können keine hohen Partikeldichten erreicht werden, so dass das Lösemittel und erhebliche Mengen Wasser entfernt werden müssen.

Anders als bei der Aussalz-Technik kommen bei der Emulsions-Diffusions-Technik nur partiell wasserlösliche Lösemittel zum Einsatz (Eur. J. Pharm. Biopharm., 41 (1995), S. 14-18). Das mit Wasser gesättigte und Polymer enthaltende organische Lösemittel wird in einer mit Lösemittel gesättigten und einen Stabilisator enthaltenden wässrigen Phase emulgiert. Die anschließende Zugabe von Wasser zu dieser Emulsion verursacht eine Diffusion des Lösemittels in die wässrige Phase und somit die Bildung von Nanopartikeln. Auch hier werden nur geringe Partikeldichten erzielt, sodass zur Konzentration neben dem Lösemittel auch größere Mengen Wasser entfernt werden müssen.

Eine weitere Technik ist die Nanoprecipitation (Nano-Ausfällung), die aus US 5 118 528 bekannt ist. Eine Lösung, bestehend aus einem Polymer, einem wasserlöslichen Lösemittel und bei Bedarf einer oberflächenaktiven Substanz, wird unter Rühren zu einer wässrigen Phase, in der das Polymer nicht löslich ist und die ebenfalls oberflächenaktive Substanzen enthalten kann, hinzugegeben. Dabei bilden sich praktisch augenblicklich Nanopartikel. Bevorzugt wird die organische Polymer-Lösmittel-Lösung zu der wässrigen Phase hinzugegeben, aber auch der umgekehrte Fall ist möglich. Im Anschluss an die Fällung kann das Lösemittel mittels Vakuumdestillation entfernt werden.

Die Zweckmäßigkeit des einfachen Verfahrens der Nano-Ausfällung wird durch eine ausreichende Verteilung der Polymer-Lösemittel-Phase in der wässrigen Phase limitiert. Die Polymer-Lösemittel-Lösung wird zu der wässrigen Lösung unter intensivem Rühren entweder langsam hinzugeschüttet oder injiziert. Die beobachteten Partikelgrößenverteilungen sind breit und die Reproduzierbarkeit des Verfahrens ist eingeschränkt.

Ein Scale-Up der so durchgeführten Nano-Ausfällung ist schwierig, da für die Größe der entstehenden Partikel bei der Nano-Ausfällung die Dispergierung, also die Feinverteilung, der organischen in der wässrigen Phase entscheidend ist. Im Labormaßstab kann dies über intensives Rühren der wässrigen Phase während der Zugabe der organischen Polymerlösung erreicht werden. Mit Vergrößerung der Arbeitsvolumina wird dies jedoch zunehmend ineffektiv. Die Nanopartikelherstellung per Nano-Ausfällung ist daher bislang auf kleine Mengen beschränkt und erfordert einen hohen zeitlichen Aufwand.

Ausgehend von diesem Stand der Technik ist die der Erfindung zugrunde liegende Aufgabe, ein Verfahren zum einfachen, reproduzierbaren und kostengünstigen Herstellen polymerer, insbesondere wirkstoffbeladbarer, Nanopartikel im technischen Maßstab zur Verfügung zu stellen. Ferner ist es die zugrunde liegende Aufgabe, polymere Nanoartikel zur Verfügung zu stellen, die auf besonders einfache und kontrollierte Weise mit einer schmalen Partikelgrößenverteilung herstellbar sind. Ferner liegt der Erfindung die Aufgabe zugrunde, eine Vorrichtung zur Herstellung von polymeren Nanopartikeln zur Verfügung zu stellen, mittels derer eine satzweise oder kontinuierliche Produktion von polymeren Nanopartikeln auf einfache, reproduzierbare und kostengünstige Weise ermöglicht ist.

Die der Erfindung zugrunde liegende Aufgabe wird gelöst durch ein Verfahren zum Herstellen von Nanopartikeln aus einem Polymer mit den folgenden Verfahrensschritten:
- Lösen eines Polymers in einem Lösemittel;
- Einleiten des Lösemittels mit dem gelösten Polymer in ein Fällmittel zum Ausfällen von Nanopartikeln,
das dadurch weitergebildet ist, dass das Lösemittel mit dem gelösten Polymer zu einer porösen Membran zugeführt wird und das Lösemittels mit dem gelösten Polymer durch Poren der Membran in das Fällmittel zum Ausfällen von Nanopartikeln eingeleitet wird.

Die Erfindung beruht auf dem Grundgedanken der Membranausfällung, bei der ein in einem Lösemittel gelöstes Polymer durch eine poröse Membran in einem Fällmittel sehr fein und homogen dispergiert bzw. verteilt wird, und zwar wesentlich feiner, als es bei herkömmlicher Nano-Ausfällung unter Rühren oder Einspritzen möglich ist. Durch die Membran gelangen winzige Mengen von Lösemittel mit gelöstem Polymer fein verteilt in das Fällmittel, in dem das Lösemittel sehr rasch extrem verdünnt wird. In der sich ergebenden Mischung sind Polymere schlecht oder nicht löslich, wodurch die Polymere ausfallen. Aufgrund der feinen Verteilung und gleichmäßigen Dispersion des Lösemittels im Fällmittel kommt es zur Ausfällung von sehr kleinen Nanopartikeln mit einer sehr schmalen Partikelgrößenverteilung.

Über die Auswahl geeigneter verfahrenstechnischer Parameter der Produktion wie Temperatur des Lösungsmittels, Temperatur des Fällmittels, Wahl der porösen Membran, Art und Konzentration der verschiedenen Stoffe im Lösemittel und im Fällmittel, Druckgradient über die Membran und Überströmungsgeschwindigkeiten werden Partikelgröße und andere Partikeleigenschaften definiert.

Das Ausgangsmaterial beim erfindungsgemäßen Verfahren ist ein Polymer, das in einem, vorzugsweise organischen, weiter vorzugsweise wasserlöslichen, Lösemittel gelöst ist. Im Unterschied zur Herstellung von Nanopartikeln durch Polymerisation von Monomeren entfällt hierbei die Notwendigkeit der Hinzufügung eines Polymerisations-Agens, das in einer anschließenden Aufreinigung aufwendig aus der Lösung entfernt werden müsste. Weiterhin ist es hierdurch möglich, natürliche oder semi-synthetische Polymere zu verwenden.

Im Rahmen der Erfindung sind als Lösemittel beispielsweise Aceton, Tetrahydroforan (THF), Chloroform, Methylenchlorid, Dimethylformamid (DMF), Ethylacetat und andere organische oder anorganische Lösemittel, in denen Polymere löslich sind, und die im verwendeten Fällmittel löslich sind, geeignet.

Unter einem Fällmittel wird im Rahmen der Erfindung eine Flüssigkeit verstanden, in der Polymere schlecht löslich sind, insbesondere Wasser oder wässrige Lösungen oder Lösemittel in geringerer Konzentration.

Als Membranen eignen sich organische, organisch-anorganische sowie anorganische poröse Membranen. Unter porösen Membranen werden im Rahmen der Erfindung Membranen verstanden, deren Poren durchschnittliche Porenradien zwischen 1 und 100 nm aufweisen. Es können erfindungsgemäß insbesondere Flachmembranen oder Hohlfadenmembranen eingesetzt werden. Vorzugsweise weisen die verwendeten Membranen eine enge Porenradienverteilung auf und sind im verwendeten Lösemittel bzw. Lösemittelgemisch bzw. Fällmittel bzw. Fällmittelgemisch beständig.

Der mittlere Porenradius der verwendeten Membranen ist vorzugsweise im Bereich zwischen 1 und 100 nm, insbesondere zwischen 5 und 20 nm, ferner insbesondere zwischen 9 und 10 nm. Mit derart feinen Poren wird eine besonders gute Dispergierung des Lösemittels in Fällmittel erreicht.

Das erfindungsgemäße Verfahren erfährt eine vorteilhafte Weiterbildung, wenn die Nanopartikel mit einem Wirkstoff beladen werden. Durch diese Maßnahme ist es möglich, die Nanopartikel zur gezielten Applikation und Freisetzung von Wirkstoffen einzusetzen. Als Wirkstoffe kommen therapeutisch wirksame Wirkstoffe wie z.B. Antibiotika oder lipophile oder hydrophile Wirkstoffe in Frage, aber auch andere Wirkstoffe, wie anorganische Partikel, wie z.B. Eisen-oder Metallpartikel zur Magnetstimulation, Wirkstoffe zur Verhinderung von Russbildung in Dieselkraftstoffen oder Pestizide. Auf diese Weise ist es möglich, allgemein Wirkstoffe mit einer vorbestimmten Freisetzungsrate auf verschiedenen Anwendungsgebieten einzusetzen.

Eine besonders vorteilhafte Ausbildung des Verfahrens besteht darin, dass zum Beladen der Nanopartikel während des Ausfällens zusätzlich ein Wirkstoff im Lösemittel gelöst wird. Dies stellt eine besonders einfache Methode der Applikation von Wirkstoffen dar, weil weitere Beladungsschritte entfallen und der Wirkstoff, der schon in der ursprünglichen Lösung gelöst ist, beim Ausfällen der Nanopartikel direkt in die Nanopartikel eingebunden wird. Später kann der Wirkstoff dann entweder bei der Auflösung der Nanopartikel freigesetzt werden oder aus den Nanopartikeln heraus diffundieren.

Um die Einbindung von Wirkstoffen in die ausfallenden Nanopartikel zu unterstützen, besteht eine vorteilhafte Weiterbildung des erfindungsgemäßen Verfahrens darin, dass zur Erhöhung der Beladung der Nanopartikel mit dem Wirkstoff zusätzlich ein Emulgator im Lösemittel gelöst wird. Emulgatoren wie z.B. Lecithin, Miglyol-810 oder Miglyol-812 und ähnliche geeignete Emulgatoren der Miglyol-Familie sowie andere geeignete Emulgatoren unterstützen die Einbindung des Wirkstoffs in die Nanopartikel während des Ausfällprozesses. Emulgatoren kommen insbesondere bei lipophilen Wirkstoffen vorteilhaft zur Anwendung.

Eine besonders vorteilhafte Weiterbildung des erfindungsgemäßen Verfahrens ist erreicht, wenn das Polymer biologisch abbaubar ist. Darunter wird ebenfalls erfindungsgemäß verstanden, dass die Nanopartikel biologisch abbaubar sind. Dies stellt eine besonders umweltschonende sowie gesundheitsverträgliche Maßnahme dar und erhöht die Einsetzbarkeit der Nanopartikel in therapeutischen oder landwirtschaftlichen Anwendungen, insbesondere bei Verwendung der Nanopartikel z.B. zum Zuführen von Wirkstoffen in den menschlichen oder tierischen Körper oder bei der Behandlung von Pflanzen.

In einer vorteilhaften, weil effektiven Ausbildung des Verfahrens weist das Polymer ein Molekulargewicht zwischen 10.000 amu und 2.000.000 amu, insbesondere zwischen 50.000 amu und 200.000 amu auf. Polymere dieser Größe sind besonders zur Bildung von Nanopartikeln geeignet, da größere Polymere zu größerer Viskosität im Lösemittel tendieren und kleine Polymere eine geringe Neigung zur Bildung von Nanopartikeln aufweisen.

Erfindungsgemäß finden alle Polymere mit der Fähigkeit zur Bildung von Nanopartikeln Anwendung. Beispielhaft seien Poly-ε-caprolacton (PCL), Block-Copolymere mit Poly-ε-caprolacton, Polymilchsäure (PLA), Polyetherimid, Polymilchsäureglycolid (PLGA), Polyacrylnitrid (PAN) und ähnliche Polymere sowie Modifikationen derselben oder auch Blöcke verschiedener Polymere wie beispielsweise Polycaprolacton und Polymilchsäure genannt.

Wenn das Lösemittel ein organisches Lösemittel ist, ist eine vorteilhafte Weiterbildung des erfindungsgemäßen Verfahrens gegeben. Beispiele für Lösungsmittel, die bei dem Verfahren Verwendung finden, sind Aceton, Tetrahydroforan (THF), Chloroform, Methylenchlorid, Dimethylformamid (DNF) oder Ethylacetat. Das Lösemittel wird nach Beständigkeit eines Wirkstoffs oder eines Emulgators im Lösemittel ausgewählt.

Das erfindungsgemäße Verfahren erfährt eine vorteilhafte Ausbildung, wenn das Fällmittel Wasser enthält oder Wasser ist. Wasser oder wässrige Lösungen bilden ein kostengünstiges und einfach zu handhabendes Fällmittel, in dem Nanopartikel und ggf. Wirkstoffe beständig sind.

Um ein Agglomerieren der ausgefällten Nanopartikel zu verhindern, besteht eine vorteilhafte Weiterbildung des Verfahrens darin, dass dem Fällmittel eine oberflächenaktive Substanz beigefügt wird. Die oberflächenaktive Substanz, beispielsweise Pluronic F68 oder eine vergleichbare Pluronic-Substanz oder vergleichbare oberflächenaktive Substanzen, bewirkt eine Abstoßung der Nanopartikel und verhindert somit, dass Nanopartikel Verbindungen unter Bildung neuer, größerer agglomerierter Strukturen eingehen.

Vorteilhafterweise wird das Lösemittel mit dem gelösten Polymer mittels eines Druckgradienten durch die poröse Membran in das Fällmittel geleitet. Dadurch, dass das Lösemittel auf einer Seite (Retentatseite) der Membran unter einen größeren Druck gesetzt wird als das Fällmittel auf der gegenüberliegenden Seite (Permeatseite) der Membran, wird ein ständiger kontrollierter Zufluss des Lösemittels in das Fällmittel erreicht. Durch Einstellung des Druckgradienten wird die Prozessgeschwindigkeit optimal eingestellt.

Vorteilhafterweise wird das Verfahren dadurch weitergebildet, dass das Lösemittel und/oder das Fällmittel temperiert wird. Unter einer Temperierung wird erfindungsgemäß das Konstanthalten der Temperatur des Lösemittels bzw. des Fällmittels verstanden. Um eine konstante Partikelgröße zu erreichen, wird die Temperatur des Lösemittels und des Fällmittels daher vorzugsweise konstant gehalten.

In einer weiteren vorteilhaften Weiterbildung des erfindungsgemäßen Verfahrens wird das Lösemittel und/oder das Fällmittel gerührt. Das Rühren des Lösemittels bzw. des Fällmittels hat die Aufgabe, eine homogene Löslichkeit des Polymers im Lösemittel bzw. der Verteilung von ausgefällten Nanopartikeln im Fällmittel zu gewährleisten, wodurch ein Ausfällen von Polymer im Lösemittel und ein Agglomerieren von Nanopartikeln im Fällmittel vermieden wird.

Eine besonders effektive und somit vorteilhafte Weiterbildung erfährt das erfindungsgemäße Verfahren, wenn das Lösemittel mit dem gelösten Polymer aus einem Lösemittelbehälter und das Fällmittel aus einem Fällmittelbehälter in zwei Kreisläufen in zwei durch die poröse Membran getrennte Volumina eines Membranreaktors gepumpt werden und aus diesen zurück in den Lösemittelbehälter bzw. den Fällmittelbehälter gepumpt werden. Diese so genannte satzweise Produktion ermöglicht eine starke Anreicherung des Fällmittels mit Nanopartikeln. Die satzweise Produktion ist somit besonders effektiv und kommt mit verhältnismäßig wenig Ausgangsstoff aus. Alternativ kann die Produktion natürlich auch kontinuierlich erfolgen. Dies hat produktionstechnisch den Vorteil, dass der Produktionsablauf nicht zum Herstellen eines neuen Satzes bei satzweiser Produktion unterbrochen wird.

Das erfindungsgemäße Verfahren wird vorteilhaft durch einen Filtrationsschritt erweitert, in dem Agglomerate von Nanopartikeln, insbesondere mit einer Größe von mehr als 1000 nm, insbesondere von mehr als 300 nm, insbesondere von mehr als 60 nm, herausgefiltert werden. Der Filtrationsschritt dient zur Erreichung eines engen Größenspektrums der Nanopartikel und besteht insbesondere aus einem Ultrafiltrationsschritt oder einem Nanofiltrationsschritt. Das dann erzeugte Permeat weist entsprechende Nanopartikel bzw. Agglomerate von Nanopartikeln auf, die kleiner als 1000 nm, insbesondere 300 nm und insbesondere 60 nm sind.

Vorteilhafterweise werden die durch das erfindungsgemäße Verfahren hergestellten polymeren Nanopartikel durch Vakuumdestillieren vom Lösemittel und Fällmittel getrennt. Unter Vakuumdestillation oder Vakuumdestillieren wird erfindungsgemäß das Anlegen eines niedrigen Luft- oder Gasdrucks an das Fällmittel mit dem Lösemittel und den Nanopartikeln verstanden, durch das die flüssigen Bestandteile verdampfen und die festen Bestandteile, nämlich die Nanopartikel, übrig bleiben. Bei der Destillation mittels Anlegen eines Vakuums werden die Nanopartikel nicht beschädigt, im Unterschied zu einer Destillation durch Erwärmung, in der die polymeren Nanopartikel und ggf. darin enthaltene Wirkstoffe verändert werden.

Alternativ können die Nanopartikel auch durch Sprühtrocknung aus der Suspension der Nanopartikel im Fällmittel zu Nanopulver verarbeitet werden.

Im Anschluss an die Vakuumdestillation kann sich als Aufreinigungsschritt eine Gelchromatographie anschließen. Unter dem Begriff "Aufreinigen" wird erfindungsgemäß die Herstellung eines "reinen" Ausgangsprodukts, das von anderen im Verfahren verwendeten Materialien sowie von Ausschussprodukten getrennt ist, verstanden. Das Verfahren ermöglicht erstmals die Herstellung größerer Mengen von Nanopartikeln nach der Methode der Nanoausfällung.

Die der Erfindung zugrunde liegende Aufgabe wird auch gelöst durch polymere Nanopartikel, deren Polydispersität kleiner als 0.4 ist, herstellbar aus einem Polymer in einem erfindungsgemäßen Verfahren. Die erfindungsgemäßen polymeren Nanopartikel sind weder aus der Polymerisation von Monomeren herstellbar, noch in einem Verfahren der Nano-Ausfällung ohne Verwendung von porösen Membranen, da durch bekannte Nanoausfällungsverfahren polymere Nanopartikel aus Polymeren als Grundstoff, und daher mit gut definiertem Molekulargewicht, nicht reproduzierbar mit einer schmalen Größenverteilung herstellbar sind. Die erfindungsgemäßen polymeren Nanopartikel weisen demgegenüber eine sehr schmale Größenverteilung (Polydispersität) und kleine Größen auf.

Vorteilhafterweise sind die erfindungsgemäßen polymeren Nanopartikel wirkstoffbeladbar oder wirkstoffbeladen, so dass sie in einer Vielzahl von Anwendungen, unter anderem in therapeutischer Anwendung zur Zugabe von Medikamenten, einsetzbar sind, in denen eine bestimmte Freisetzungsrate erforderlich ist.

Besonders gut anwendbar in therapeutischen Anwendungen oder zur Behandlung von Pflanzen und Tieren sind die erfindungsgemäßen polymeren Nanopartikel, wenn das Polymer der Nanopartikel biologisch abbaubar ist und/oder die polymeren Nanopartikel biologisch abbaubar sind.

Vorteilhafterweise ist die durchschnittliche Größe der polymeren Nanopartikel kleiner als 1000 nm, insbesondere kleiner als 300 nm, ferner insbesondere kleiner als 60 nm. Derart kleine Nanopartikel sind in einer Vielzahl von Anwendungen vorteilhaft anwendbar, beispielsweise in der Landwirtschaft zur Applikation von Pestiziden, in der Unterdrückung von Russbildung in Dieselkraftstoffen oder in der Zuführung von Medikamenten in den menschlichen oder tierischen Kreislauf.

Eine im Sinne der Erfindung besonders vorteilhafte Größenverteilung ist erreicht, wenn die Polydispersität der polymeren Nanopartikel kleiner als 0.25, insbesondere kleiner als 0.15 ist. Durch die kleine Polydispersität ist eine besonders genaue Einstellung der Wirkstoffabgaberaten möglich.

Die der Erfindung zugrunde liegende Aufgabe wird auch gelöst durch die Verwendung einer porösen Membran in einem Verfahren zur Herstellung von polymeren Nanopartikeln aus einem Polymer. Durch die Verwendung einer porösen Membran zur Verteilung des Lösemittels im Fällmittel wird eine besonders feine Dispersion des Lösemittels im Fällmittel erreicht, durch die die Ausfällung besonders kleiner Nanopartikel bewirkt wird, zusammen mit einer reproduzierbaren schmalen Partikelgrößenverteilung.

Die Verwendung einer porösen Membran zur Herstellung von polymeren Nanopartikeln aus einem Polymer findet vorteilhafte Weiterbildungen, wenn die polymeren Nanopartikel wirkstoffbeladbar oder wirkstoffbeladen sind bzw. wenn das Polymer biologisch abbaubar ist. Bei der Herstellung wirkstoffbeladbarer oder wirkstoffbeladener Nanopartikel unter Verwendung von porösen Membranen wird neben dem Lösemittel mit dem Polymer auch der Wirkstoff besonders fein verteilt, wodurch eine besonders effiziente und starke Beladung der ausgefällten Nanopartikel mit Wirkstoff erreicht wird.

Die der Erfindung zugrunde liegende Aufgabe wird ferner gelöst durch eine Vorrichtung zur Herstellung von polymeren Nanopartikeln aus einem, insbesondere biologisch abbaubaren, Polymer umfassend einen Lösemittelbehälter für Lösemittel, in dem das Polymer lösbar ist, und einen Fällmittelbehälter, die über Leitungen für Lösemittel und Fällmittel mit einem Membranreaktor zur Membranausfällung mit einer porösen Membran, durch die das Volumen des Membranreaktors in zwei getrennte Volumina aufgeteilt ist, nämlich ein Retentatvolumen für das Lösemittel mit dem gelösten Polymer und ein Permeatvolumen für das Fällmittel mit den ausgefällten Nanopartikeln, verbunden sind, wobei die Leitung für das Lösemittel eine Lösemittelpumpe und die Leitung für das Fällmittel eine Fällmittelpumpe zum Pumpen des Lösemittels und des Fällmittels in den Membranreaktor aufweist.

Retentatvolumen und Permeatvolumen des Membranreaktors weisen außerdem Leitungen auf, durch die die Löse- bzw. Fällmittel aus den entsprechenden Volumina des Membranreaktors herausgeleitet werden.

Um sicher zu stellen, dass das Lösemittel im Membranreaktor durch die poröse Membran in das Permeatvolumen eindringt, weist das Lösemittel im Membranreaktor vorteilhaft einen höheren Druck auf als das Fällmittel. Dies wird durch entsprechende Einstellung der in der Lösemittelpumpe und der Fällmittelpumpe erzeugten Drücke erreicht.

Um die erfindungsgemäße Vorrichtung besonders effektiv betreiben zu können, besteht eine vorteilhafte Weiterbildung der Vorrichtung darin, dass Rückführungsleitungen für das Lösemittel aus dem Membranreaktor in den Lösemittelbehälter und für das Fällmittel aus dem Membranreaktor in den Fällmittelbehälter vorgesehen sind. Auf diese Weise ist eine Zirkulation des Lösemittels und des Fällmittels möglich, durch die das Lösemittel mit dem Polymer wieder verwendet wird und das Fällmittel zur Anreicherung von Nanopartikeln zirkuliert wird.

Die erfindungsgemäße Vorrichtung wird vorteilhaft weitergebildet, wenn am Lösemittelbehälter eine Lösemitteltemperiervorrichtung und/oder eine Lösemittelrührvorrichtung vorgesehen sind bzw. wenn am Fällmittelbehälter eine Fällmitteltemperiervorrichtung und/oder eine Fällmittelrührvorrichtung vorgesehen sind. Durch das Temperieren und/oder Rühren von Lösemittel bzw. Fällmittel sind die Herstellungsbedingungen kontrolliert und wiederholbar einstellbar und optimierbar. Es wird außerdem ein Ausfällen des Polymers im Lösemittel und ein Agglomerieren der Nanopartikel im Fällmittel verhindert.

Zur Nachbehandlung des Herstellungsprodukts aus Fällmittel mit Nanopartikeln ist vorteilhaft bei der erfindungsgemäßen Vorrichtung eine Filtrationsvorrichtung zum Abscheiden von Agglomeraten von Nanopartikeln vorgesehen.

Zum Trennen der Nanopartikel vom Lösemittel und Fällmittel ist vorteilhaft eine Vakuumdestilliervorrichtung vorgesehen. Mittels der Vakuumdestilliervorrichtung ist eine Trennung der Nanopartikel von den flüssigen Bestandteilen möglich, ohne die Nanopartikel in ihrer Struktur zu verändern. Alternativ ist eine Sprühtrocknungseinrichtung zur Herstellung eines Nanopulvers aus der Suspension von Nanopartikeln im Fällmittel vorgesehen.

Zur Aufreinigung der Nanopartikel ist vorteilhaft eine Gelchromatographiesäule bzw. eine Gelchromatographieeinrichtung vorgesehen.

Schließlich wird die der Erfindung zugrunde liegende Aufgabe auch durch die Verwendung von polymeren, wirkstoffbeladbaren und/oder wirkstoffbeladenen, Nanopartikeln, deren Polydispersität kleiner als 0.4 ist, herstellbar oder hergestellt in einem erfindungsgemäßen Verfahren, zur kontrollierten Zuführung von Wirkstoffen für therapeutische Zwecke, gelöst.

Die erfindungsgemäßen polymeren Nanopartikel sind insbesondere biologisch abbaubar, so dass die Nanopartikel besonders verträglich für therapeutische Zwecke sind. Durch die gute Einstellbarkeit der Partikelgrößen und der Beladung mit Wirkstoff ist eine äußerst genaue Dosierung bzw. Dosierbarkeit des Wirkstoffs ermöglicht, durch die eine therapeutische Verwendung der erfindungsgemäßen polymeren, wirkstoffbeladbaren und/oder wirkstoffbeladenen Nanopartikel erst erreicht wird. Eine solche therapeutische Verwendung ist effizient erst durch die Herstellung der polymeren Nanopartikel mittels des erfindungsgemäßen Verfahrens ermöglicht, da andere verträgliche, wirkstoffbeladene oder wirkstoffbeladbare Nanopartikel eine zu breite Größenverteilung und zu große Unterschiede in der Beladung mit Wirkstoff aufweisen, um für therapeutische Zwecke geeignet zu sein. Das Membranverfahren ermöglicht die Herstellung größerer Mengen mit enger Größenverteilung.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Ausführungsbeispiels einer erfindungsgemäßen Vorrichtung zur Herstellung von polymeren Nanopartikeln,
- Fig. 2: eine schematische Darstellung eines weiteren Ausführungsbeispiels einer erfindungsgemäßen Vorrichtung zur Herstellung von polymeren Nanopartikeln und
- Fig. 3: eine schematische Darstellung eines weiteren Ausführungsbeispiels einer erfindungsgemäßen Vorrichtung zur Herstellung von polymeren Nanopartikeln.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird und lediglich Abweichungen der in diese Figuren dargestellten Ausführungsbeispiele gegenüber dem ersten Ausführungsbeispiel erläutert werden.

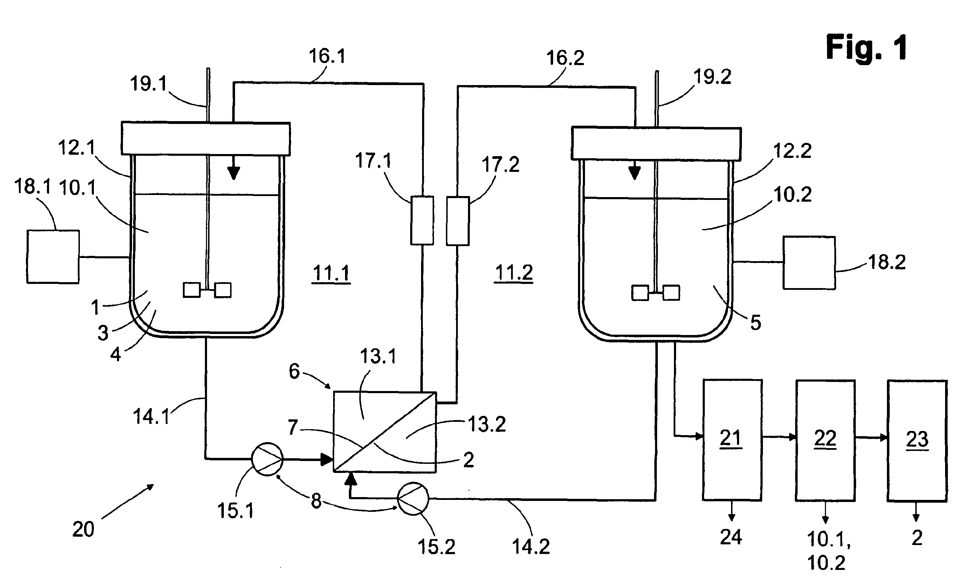

Fig. 1 zeigt eine schematische Darstellung einer erfindungsgemäßen Vorrichtung zur Herstellung von polymeren Nanopartikeln. In einem Lösemittelbehälter 12.1 befindet sich ein Lösemittel 10.1 mit darin gelöstem Polymer 1, Wirkstoff 3 und Emulgator 4. Das Lösemittel 10.1 wird mittels einer Rührvorrichtung 19.1 für das Lösemittel 10.1 gerührt und mittels einer Lösemittel-Temperiervorrichtung 18.1 auf einer konstanten, erhöhten Temperatur gehalten, um eine gute Löslichkeit der gelösten Substanzen 1, 3, 4 zu gewährleisten. Über eine Lösemittelleitung 14.1. wird das Lösemittel 10.1 mittels einer Lösemittelpumpe 15.1 in das Retentatvolumen 13.1 eines Membranreaktors 6 gepumpt. Im Membranreaktor 6 überströmt das Lösemittel 10.1 die Retentatseite einer porösen Membran 7.

In einem Fällmittelbehälter 12.2 befindet sich ein Fällmittel 10.2 mit darin gelöster oberflächenaktiver Substanz 5. Das Fällmittel 10.2 wird mittels einer Fällmittel-Rührvorrichtung 19.2 gerührt. Eine Fällmittel-Temperiervorrichtung 18.2 hält das Fällmittel 10.2 auf einer konstanten Temperatur.

Durch eine Fällmittelleitung 14.2 wird das Fällmittel 10.2 mittels einer Fällmittelpumpe 15.2 in das Permeatvolumen 13.2 des Membranreaktors 6 gepumpt, wo es die Permeatseite der porösen Membran 7 überströmt. Zwischen dem Pumpdruck des Lösemittels 10.1 und dem Pumpdruck des Fällmittels 10.2 bildet sich ein Druckgradient 8 aus, der dafür sorgt, dass Lösemittel 10.2 aus dem Retentatvolumen 13.1 über die poröse Membran 7 in das Permeatvolumen 13.2 mit dem Fällmittel 10.2 eindringt. Das durch die Poren der Membran 7 strömende Lösemittel 10.1 mit den darin gelösten Stoffen 1, 3, 4 wird durch die Feinheit der Poren, beispielsweise einer Ultra- oder Nanofiltrationsmembran, äußerst fein in dem Fällmittel 10.2 dispergiert, wodurch in der Nähe der Membran 7 unmittelbar polymere Nanopartikel 2 ausfallen, die mit dem Wirkstoff 3 beladen sind.

Die in Fig. 1 gezeigte Vorrichtung 20 wird in einem satzweisen Verfahren betrieben, in dem Nanopartikel in einem Kreislauf angereichert werden. Dafür sind Rückleitungen 16.1. und 16.2 für das Lösemittel 10.1 und das Fällmittel 10.2 vorgesehen, durch die das Lösemittel 10.1 in den Lösemittelbehälter 12.1 bzw. das Fällmittel 10.2 in den Fällmittelbehälter 12.2 zurückgeführt werden. Die Rückleitungen 16.1, 16.2 weisen Flowmeter 17.1, 17.2 auf, mittels derer die Durchströmungsrate des Lösemittels 10.1 und 10.2 gemessen und kontrolliert wird.

Die Behälter 12.1, 12.2 bilden zusammen mit den Leitungen 14.1, 14.2, Pumpen 15.1, 15.2 und Rückleitungen 16.1, 16.2 zwei Kreisläufe 11.1, 11.2 für das Lösemittel 10.1 und das Fällmittel 10.2. Die Kreisläufe 11.1, 11.2, die im Membranreaktor 6 in Kontakt treten, sind durch die poröse Membran 7 getrennt.

Durch die Rückführung des Lösemittels 10.1 und des Fällmittels 10.2 in den Kreisläufen 11.1 und 11.2 werden Lösemittel und Polymer effektiv genutzt und nur wenig davon benötigt. Im Fällmittelkreislauf 11.2 werden Nanopartikel angereichert. Im Fällmittelkreislauf 11.2 wächst während des Betriebs der Nanopartikelherstellung die Konzentration des gelösten Lösemittels 10.1 im Fällmittel 10.2 allmählich an.

Nach Beendigung der Herstellung eines Satzes von polymeren Nanopartikeln wird die Suspension aus polymeren Nanopartikeln 2 in dem Gemisch aus Fällmittel 10.2 und Lösemittel 10.1 ggf. in einer Ultrafiltrationsvorrichtung 21 von Nanopartikel-Agglomeraten 24 befreit, anschließend in einer Vakuumdestilliervorrichtung 22 vom Fällmittel 10.2 und Lösemittel 10.1 getrennt und die Nanopartikel 2 schließlich in einer Gelchromatographievorrichtung 23 aufgereinigt.

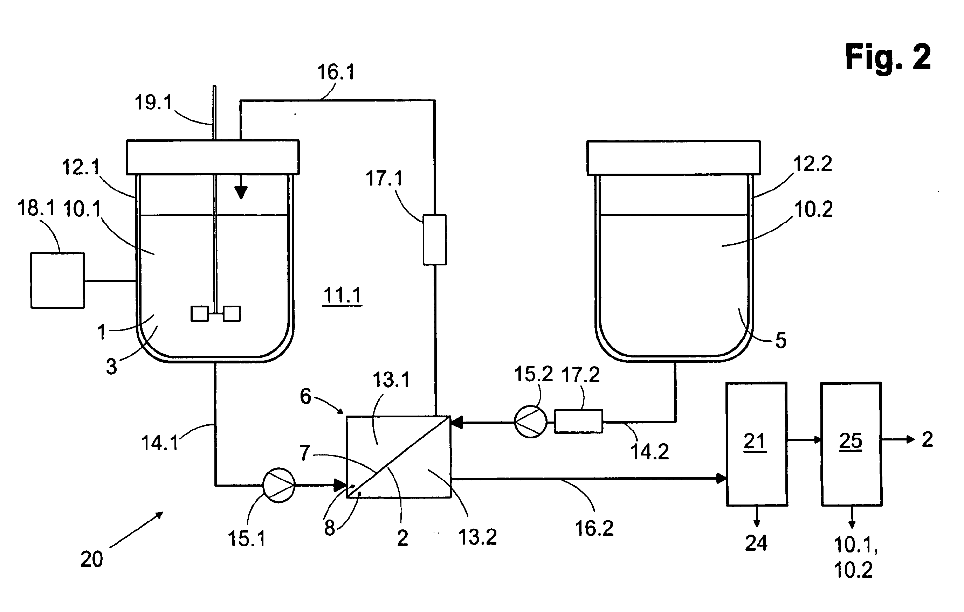

Im in Fig. 2 gezeigten Ausführungsbeispiel wird deutlich, dass in einem alternativen Verfahren die erfindungsgemäße Vorrichtung auch kontinuierlich betrieben werden kann. Hierzu wird das Fällmittel 10.2 aus dem Permeatvolumen 13.2 des Membranreaktors 6 nicht in den Fällmittelbehälter 12.2 zurückgeführt, sondern direkt in einer Ultrafiltrationsvorrichtung von Agglomeraten 24 befreit. Im vorliegenden Beispiel wird aus der resultierenden Suspension von Nanopartikeln 2 und Gemisch aus Lösemittel 10.1 und Fällmittel 10.2 in einer Sprühtrocknungsvorrichtung 25 ein Pulver aus Nanopartikeln 2 erzeugt. In diesem Ausführungsbeispiel entfällt der Schritt der Gelchromatographie 23.

Der Lösemittelkreislauf 11.1 ist gegenüber dem Ausführungsbeispiel gem. Fig. 1 unverändert, wobei allerdings lediglich ein Wirkstoff 3, aber kein Emulgator 4 im Lösemittel 10.1 gelöst ist. Die in Fig. 1 vorgestellte Vakuumdestilliervorrichtung 22 und die Sprühtrocknungsvorrichtung 25 gemäß Fig. 2 sind austauschbar.

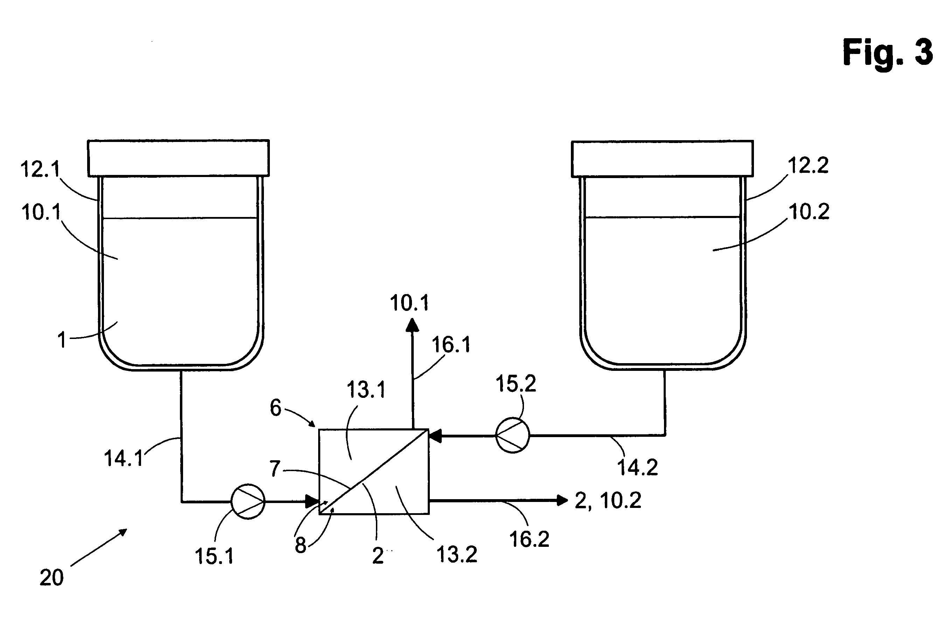

In Fig. 3 ist ein vereinfachtes Ausführungsbeispiel einer erfindungsgemäßen Vorrichtung dargestellt. Die Flowmeter, Temperier- oder Rührvorrichtungen 17.1, 17.2, 18.1, 18.2, 19.1, 19.2 entfallen. Das Lösemittel 10.1 wird nach dem Durchströmen des Retentatvolumens 13.1 des Membranreaktors durch eine ausgangsseitige Leitung 16.1 aus dem Mem-branreaktor 6 abgeführt und entsorgt. Ebenso wird das Fällmittel 10.2 mit den inzwischen ausgefällten Nanopartikeln 2 durch eine Ausgangsleitung 16.2 direkt abgeführt und abgefüllt. Das abgefüllte Fällmittel 10.2 mit den Nanopartikeln 2 kann weiteren Verfahrenschritten zugeführt werden.

Im Ausführungsbeispiel gemäß Fig. 3 sind dem Polymer 1 im Lösemittel 10.1 im Lösemittelbehälter 12.1 keine weiteren Stoffe hinzugefügt. Das Ausführungsbeispiel gem. Fig. 3 stellt somit eine sehr einfache erfindungsgemäße Vorrichtung zur Herstellung von polymeren Nanopartikeln dar.

Erfindungsgemäß können je nach Einsatzweck der herzustellenden polymeren Nanopartikel die vorgestellten Elemente eingesetzt oder weggelassen werden, und zwar getrennt für Lösemittel 10.1 und Fällmittel 10.2. Es ergibt sich eine Vielzahl von Verwendungsmöglichkeiten für die polymeren Nanopartikel, die eine ebenso große Vielzahl möglicher Kombinationen der zum Einsatz kommenden Vorrichtungskomponenten erfordert. Das erfindungsgemäße Verfahren und die erfindungsgemäße Vorrichtung sind daher auf die Herstellung einer großen Vielfalt erfindungsgemäßer polymerer Nanopartikel anpassbar.

Die Erfindung wird im Folgenden anhand eines Beispiels näher erläutert.

### Beispiel

Zur Herstellung der Nanopartikel wurde die in Fig. 1 vorgestellte Anlage verwendet. Unter Rühren und Erwärmen auf 40°C wurden 0,1 Gew.-% Poly-ε-caprolacton (Polymer 1) in 400 g Aceton gelöst (Lösemittel 10.1). Das Fällmittel 10.2 wurde durch Lösen von 2,5 g Pluronic F68 (oberflächenaktive Substanz 5) in einem Liter demineralisiertes Wasser hergestellt. Als poröse Membran 7 wurde eine Polyacrylnitril-Membran (PAN-Ultrafiltrationsmembran) der Anmelderin (N₂-Fluss > 1.000 m³/m²hbar) aus einer hochporösen Stützschicht und einer mit definierten Nanoporen versehenen sehr dicht vernetzten PAN-Schicht verwendet. Als Beispiel hierzu sei auf die WO 97/03747 der Anmelderin verwiesen. Die PAN-Ultrafiltrationsmembran ist beständig gegenüber den verwendeten Löse- bzw. Fällmitteln.

Beide Lösungen wurden mittels Pumpen 15.1, 15.2 mit definiertem Volumenfluss im Kreislauf durch ein Membranmodul 6, eine Standardtestzelle der Anmelderin, geführt. Das Lösemittel 10.1 überströmt die Stützschicht und das Fällmittel 10.2 die PAN-Schicht der Membran 7.

Durch einen leichten Druckgradienten wird die Lösung 10.1 durch die Membran 7 hindurch in der Lösung 10.2 sehr fein dispergiert. Da dabei die Löslichkeit des Polymers sinkt, fällt dieses praktisch augenblicklich aus. Innerhalb weniger Sekunden kann eine Trübung der Aufnehmerphase 10.2 beobachtet werden. Das Ergebnis dieses Verfahrens ist eine milchige Lösung bestehend aus Wasser, Aceton, Pluronic und PCL-Nanopartikeln.

An die Fällung schloss sich ein Filtrationsschritt zur Entfernung größerer Agglomerate an. Anschließend wurden mittels Vakuumdestillation bei 40°C zunächst das Aceton und im Anschluss zur weiteren Aufkonzentrierung Wasser entfernt. Als abschließender Aufreinigungsschritt wurde eine Gelchromatographie (Sepharose) durchgeführt.

Die so produzierten Nanopartikel hatten einen mittleren Partikeldurchmesser von 220 nm bei einer Polydispersität von weniger als 0.25.

### Bezugszeichenliste

- 1: Polymermembran
- 2: Polymere Nanopartikel
- 3: Wirkstoff
- 4: Emulgator
- 5: Oberflächenaktive Substanz
- 6: Membranreaktor
- 7: Poröse Membran
- 8: Druckgradient
- 10.1: Lösemittel
- 10.2: Fällmittel
- 11.1: Lösemittelkreislauf
- 11.2: Fällmittelkreislauf
- 12.1: Lösemittelbehälter
- 12.2: Fällmittelbehälter
- 13.1: Retentatvolumen
- 13.2: Permeatvolumen
- 14.1: Lösemittelleitung
- 14.2: Fällmittelleitung
- 15.1: Lösemittelpumpe
- 15.2: Fällmittelpumpe
- 16.1: Lösemittelrückleitung
- 16.2: Fällmittelrückleitung
- 17.1: Lösemittel-Flowmeter
- 17.2: Fällmittel-Flowmeter
- 18.1: Lösemittel-Temperiervorrichtung
- 18.2: Fällmittel-Temperiervorrichtung
- 19.1: Lösemittel-Rührvorrichtung
- 19.2: Fällmittel-Temperiereinrichtung
- 20: Vorrichtung
- 21: Ultrafiltrationsvorrichtung
- 22: Vakuumdestilliervorrichtung
- 23: Gelchromatographievorrichtung
- 24: Agglomerate
- 25: Sprühtrocknungsvorrichtung

## Patentansprüche

1. Verfahren zum Herstellen von Nanopartikeln (2) aus einem Polymer (1) mit den folgenden Verfahrensschritten:
- Lösen eines Polymers (1) in einem Lösemittel (10.1);
- Einleiten des Lösemittels (10.1) mit dem gelösten Polymer (1) in ein Fällmittel (10.2) zum Ausfällen von Nanopartikeln (2),
**dadurch gekennzeichnet, dass** das Lösemittel (10.1) mit dem gelösten Polymer (1) zu einer porösen Membran (7) zugeführt wird und das Lösemittel (10.1) mit dem gelösten Polymer (1) durch Poren der Membran (7) in das Fällmittel (10.2) zum Ausfällen von Nanopartikeln (2) eingeleitet wird.

2. Verfahren nach Anspruch 1, **dadurch gekennzeichnet, dass** die Nanopartikel (2) mit einem Wirkstoff (3) beladen werden.

3. Verfahren nach Anspruch 2, **dadurch gekennzeichnet, dass** zum Beladen der Nanopartikel (2) während des Ausfällens zusätzlich ein Wirkstoff (3) im Lösemittel (10.1) gelöst wird.

4. Verfahren nach Anspruch 3, **dadurch gekennzeichnet, dass** zur Erhöhung der Beladung der Nanopartikel (2) mit dem Wirkstoff (3) zusätzlich ein Emulgator (4) im Lösemittel (10.1) gelöst wird.

5. Verfahren nach einem der Ansprüche 1 bis 4, **dadurch gekennzeichnet, dass** das Polymer (1) biologisch abbaubar ist.

6. Verfahren nach einem der Ansprüche 1 bis 5, **dadurch gekennzeichnet, dass** das Polymer (1) ein Molekulargewicht zwischen 10.000 und 2.000.000 amu, insbesondere zwischen 50.000 und 200.000 amu, aufweist.

7. Verfahren nach einem oder mehreren der Ansprüche 1 bis 6, **dadurch gekennzeichnet, dass** das Lösemittel (10.1) ein organisches Lösemittel (10.1) ist.

8. Verfahren nach einem oder mehreren der Ansprüche 1 bis 7, **dadurch gekennzeichnet, dass** das Fällmittel (10.2) Wasser enthält oder Wasser ist.

9. Verfahren nach einem oder mehreren der Ansprüche 1 bis 8, **dadurch gekennzeichnet, dass** dem Fällmittel (10.2) eine oberflächenaktive Substanz (5) beigefügt wird, um ein Agglomerieren der ausgefällten Nanopartikel (2) zu vermindern.

10. Verfahren nach einem oder mehreren der Ansprüche 1 bis 9, **dadurch gekennzeichnet, dass** das Lösemittel (10.1) mit dem gelösten Polymer (1) mittels eines Druckgradienten (8) durch die poröse Membran (7) in das Fällmittel (10.2) geleitet wird.

11. Verfahren nach einem oder mehreren der Ansprüche 1 bis 10, **dadurch gekennzeichnet, dass** das Lösemittel (10.1) und/oder das Fällmittel (10.2) temperiert wird.

12. Verfahren nach einem oder mehreren der Ansprüche 1 bis 11, **dadurch gekennzeichnet, dass** das Lösemittel (10.1) und/oder das Fällmittel (10.2) gerührt wird.

13. Verfahren nach einem oder mehreren der Ansprüche 1 bis 12, **dadurch gekennzeichnet, dass** das Lösemittel (10.1) mit dem gelösten Polymer (1) aus einem Lösemittelbehälter (12.1) und das Fällmittel (10.2) aus einem Fällmittelbehälter (12.2) in zwei Kreisläufen (11.1, 11.2) in zwei durch die poröse Membran (7) getrennte Volumina (13.1, 13.2) eines Membranreaktors (6) gepumpt werden und aus diesen zurück in den Lösemittelbehälter (12.1) bzw. den Fällmittelbehälter (12.2) gepumpt werden.

14. Verfahren nach einem oder mehreren der Ansprüche 1 bis 13, **dadurch gekennzeichnet, dass** aus den ausgefällten Nanopartikeln (2) im Fällmittel (10.2) in einem Filtrationsschritt Agglomerate (24) von Nanopartikeln (2), insbesondere mit einer Größe von mehr als 1000 nm, insbesondere von mehr als 300 nm, insbesondere von mehr als 60 nm, herausgefiltert werden.

15. Verfahren nach einem oder mehreren der Ansprüche 1 bis 14, **dadurch gekennzeichnet, dass** die Nanopartikel (2) durch Vakuumdestillieren vom Lösemittel (10.1) und Fällmittel (10.1) getrennt werden.

16. Verfahren nach Anspruch 15, **dadurch gekennzeichnet, dass** die Nanopartikel (2) zum Aufreinigen gelchromatographiert werden.

17. Polymere Nanopartikel (2), deren Polydispersität kleiner als 0.4 ist, herstellbar aus einem Polymer (1) in einem Verfahren nach einem oder mehreren der Ansprüche 1 bis 16.

18. Polymere Nanopartikel (2) nach Anspruch 17, **dadurch gekennzeichnet, dass** die Nanopartikel (2) wirkstoffbeladbar oder wirkstoffbeladen sind.

19. Polymere Nanopartikel (2) nach Anspruch 17 oder 18, **dadurch gekennzeichnet, dass** das Polymer (1) der Nanopartikel (2) biologisch abbaubar ist und/oder die polymeren Nanopartikel (2) biologisch abbaubar sind.

20. Polymere Nanopartikel (2) nach einem der Ansprüche 17 bis 19, **dadurch gekennzeichnet, dass** ihre durchschnittliche Größe kleiner als 1000 nm, insbesondere kleiner als 300 nm, insbesondere kleiner als 60 nm ist.

21. Polymere Nanopartikel (2) nach einem oder mehreren der Ansprüche 17 bis 20, **dadurch gekennzeichnet, dass** ihre Polydispersität kleiner als 0.25, insbesondere kleiner als 0.15 ist.

22. Verwendung einer porösen Membran (7) in einem Verfahren, insbesondere nach einem oder mehreren der Ansprüche 1 bis 16, zur Herstellung von polymeren Nanopartikeln (2), insbesondere nach einem oder mehreren der Ansprüche 17 bis 21, aus einem Polymer (1).

23. Verwendung einer porösen Membran (7) nach Anspruch 22, **dadurch gekennzeichnet, dass** die polymeren Nanopartikel (2) wirkstoffbeladbar oder wirkstoffbeladen sind

24. Verwendung einer porösen Membran (7) nach Anspruch 22 oder 23, **dadurch gekennzeichnet, dass** das Polymer (1) biologisch abbaubar ist.

25. Vorrichtung (20) zur Herstellung von polymeren Nanopartikeln (2), insbesondere nach einem oder mehreren der Ansprüche 17 bis 21, aus einem, insbesondere biologisch abbaubaren, Polymer (1), umfassend einen Lösemittelbehälter (12.1) für Lösemittel (10.1), in dem das Polymer (1) lösbar ist und einen Fällmittelbehälter (12.2), die über Leitungen (14.1, 14.2) für Lösemittel und Fällmittel mit einem Membranreaktor (6) zur Membranausfällung mit einer porösen Membran (7), durch die das Volumen des Membranreaktors (6) in zwei getrennte Volumina aufgeteilt ist, nämlich ein Retentatvolumen (13.1) für das Lösemittel (10.1) mit dem gelösten Polymer (1) und ein Permeatvolumen (13.2) für das Fällmittel (10.2) mit den ausgefällten Nanopartikeln (2), verbunden sind, wobei die Leitung (14.1) für das Lösemittel (10.1) eine Lösemittelpumpe (15.1) und die Leitung (14.2) für das Fällmittel (10.2) eine Fällmittelpumpe (15.2) zum Pumpen des Lösemittels (10.1) und des Fällmittels (10.2) in den Membranreaktor (6) aufweist.

26. Vorrichtung (20) nach Anspruch 25, **dadurch gekennzeichnet, dass** das Lösemittel (10.1) im Membranreaktor (6) einen höheren Druck aufweist als das Fällmittel (10.2).

27. Vorrichtung (20) nach Anspruch 25 oder 26, **dadurch gekennzeichnet, dass** Rückführungsleitungen (16.1, 16.2) für das Lösemittel (10.1) aus dem Membranreaktor (6) in den Lösemittelbehälter (12.1) und für das Fällmittel (10.2) aus dem Membranreaktor (6) in den Fällmittelbehälter (12.2) vorgesehen sind.

28. Vorrichtung (20) nach einem der Ansprüche 25 bis 27, **dadurch gekennzeichnet, dass** am Lösemittelbehälter (12.1) eine Lösemitteltemperiervorrichtung (18.1) und/oder eine Lösemittelrührvorrichtung (19.1) vorgesehen sind.

29. Vorrichtung (20) nach einem oder mehreren der Ansprüche 25 bis 28, **dadurch gekennzeichnet, dass** am Fällmittelbehälter (12.2) eine Fällmitteltemperiervorrichtung (18.2) und/oder eine Fällmittelrührvorrichtung (19.2) vorgesehen sind.

30. Vorrichtung (20) nach einem oder mehreren der Ansprüche 25 bis 29, **dadurch gekennzeichnet, dass** eine Filtrationsvorrichtung (21) zum Abscheiden von Agglomeraten (24) von Nanopartikeln (2) vorgesehen ist.

31. Vorrichtung (20) nach einem oder mehreren der Ansprüche 25 bis 30, **dadurch gekennzeichnet, dass** eine Vakuumdestilliervorrichtung (22) zur Trennung der Nanopartikel (2) vom Lösemittel (10.1) und Fällmittel (10.2) vorgesehen ist.

32. Vorrichtung (20) nach einem oder mehreren der Ansprüche 25 bis 31, **dadurch gekennzeichnet, dass** eine Gelchromatographiesäule (23) zur Aufreinigung der Nanopartikel (2) vorgesehen ist.

33. Verwendung von polymeren, wirkstoffbeladbaren und/oder wirkstoffbeladenen, Nanopartikeln (2), deren Polydispersität kleiner als 0.4 ist, herstellbar in einem Verfahren nach einem oder mehreren der Ansprüche 2 bis 16, zur kontrollierten Zuführung von Wirkstoffen (3) für therapeutische Zwecke.

## Claims

1. Method of producing nanoparticles (2) from a polymer (1) with the following method steps:
- dissolving a polymer (1) in a solvent (10.1),
- introducing the solvent (10.1) with the dissolved polymer (1) into a flocculating agent (10.2) for the precipitation of nanoparticles (2),
**characterised in that** the solvent (10.1) with the dissolved polymer (1) is delivered to a porous membrane (7) and the solvent (10.1) with the dissolved polymer (1) is introduced through pores of the membrane (7) into the flocculating agent (10.2) for the precipitation of nanoparticles (2).

2. Method as claimed in Claim 1, **characterised in that** the nanoparticles (2) are loaded with an active substance (3).

3. Method as claimed in Claim 2, **characterised in that** in addition during the precipitation an active substance (3) is dissolved in the solvent (10.1) for loading of the nanoparticles (2).

4. Method as claimed in Claim 3, **characterised in that** in addition an emulsifier (4) is dissolved in the solvent (10.1) in order to increase the loading of the nanoparticles (2) with the active substance (3).

5. Method as claimed in any one of Claims 1 to 4, **characterised in that** the polymer (1) is biodegradable.

6. Method as claimed in any one of Claims 1 to 5, **characterised in that** the polymer (1) has a molecular weight between 10,000 and 2,000,000 amu, in particular between 50,000 and 200,000 amu.

7. Method as claimed in one or several of Claims 1 to 6, **characterised in that** the solvent (10.1) is an organic solvent (10.1).

8. Method as claimed in one or several of Claims 1 to 7, **characterised in that** the flocculating agent (10.2) contains water or is water.

9. Method as claimed in one or several of Claims 1 to 8, **characterised in that** a surface-active substance (5) is added to the flocculating agent (10.2) in order to reduce agglomeration of the precipitated nanoparticles (2).

10. Method as claimed in one or several of Claims 1 to 9, **characterised in that** the solvent (10.1) with the dissolved polymer (1) is passed through the porous membrane (7) into the flocculating agent (10.2) by means of a pressure gradient (8).

11. Method as claimed in one or several of Claims 1 to 10, **characterised in that** the solvent (10.1) and/or the flocculating agent (10.2) is tempered.

12. Method as claimed in one or several of Claims 1 to 11, **characterised in that** the solvent (10.1) and/or the flocculating agent (10.2).

13. Method as claimed in one or several of Claims 1 to 12, **characterised in that** the solvent (10.1) with the dissolved polymer (1) is pumped out of a solvent container (12.1) and the flocculating agent (10.2) is pumped out of a flocculating agent container (12.2) in two circulations (11.1, 11.2) in two volumes (13.1, 13.2) divided by the porous membrane (7) of a membrane reactor (6) and these two volumes are pumped out of the membrane reactor back into the solvent container (12.1) or the flocculating agent container (12.2) respectively.

14. Method as claimed in one or several of Claims 1 to 13, **characterised in that** agglomerates (24) of nanoparticles (2), in particular with a size of more than 1000 nm, in particular more than 300 nm, in particular more than 60 nm, are filtered out of the precipitated nanoparticles (2) in the flocculating agent (10.2) in a filtration step.

15. Method as claimed in one or several of Claims 1 to 14, **characterised in that** the nanoparticles (2) are separated from the solvent (10.1) and flocculating agent (10.1) by vacuum distillation.

16. Method as claimed in Claim 15, **characterised in that** the nanoparticles (2) are subjected to gel chromatography for cleaning up.

17. Polymer nanoparticles (2), the polydispersity of which is smaller than 0.4, which can be produced from a polymer (1) in a method as claimed in one or several of Claims 1 to 16.

18. Polymer nanoparticles (2) as claimed in Claim 17, **characterised in that** the nanoparticles (2) can be loaded with active substance or are loaded with active substance.

19. Polymer nanoparticles (2) as claimed in Claim 17 or Claim 18, **characterised in that** the polymer (1) of the nanoparticles (2) is biodegradable and/or the polymer nanoparticles (2) are biodegradable.

20. Polymer nanoparticles (2) as claimed in any one of Claims 17 to 19, **characterised in that** the average size thereof is smaller than 1000 nm, in particular smaller than 300 nm, in particular smaller than 60 nm.

21. Polymer nanoparticles (2) as claimed in one or several of Claims 17 to 20, **characterised in that** the polydispersity thereof is smaller than 0.25, in particular smaller than 0.15.

22. Use of a porous membrane (7) in a method, in particular as claimed in one or several of Claims 1 to 16, for producing polymer nanoparticles (2), in particular as claimed in one or several of Claims 17 to 21, from a polymer (1).

23. Use of a porous membrane (7) as claimed in Claim 22, **characterised in that** the polymer nanoparticles (29) can be loaded with active substance or are loaded with active substance.

24. Use of a porous membrane (7) as claimed in Claim 22 or Claim 23, **characterised in that** the polymer (1) is biodegradable.

25. Apparatus (20) for producing polymer nanoparticles (2), in particular as claimed in one or several of Claims 17 to 21, from a polymer (1) which is in particular biodegradable, comprising a solvent container (12.1) for solvent (10.1) in which the polymer (1) is soluble and a flocculating agent container (12.2) which are connected via conduits (14.1, 14.2) for solvent and flocculating agent to a membrane reactor (6) for membrane precipitation with a porous membrane (7) through which the volume of the membrane reactor (6) is divided into two separate volumes, namely a retentate volume (13.1) for the solvent (10.1) with the dissolved polymer (1) and a permeate volume (13.2) for the flocculating agent (10.2) with the precipitated nanoparticles (2), wherein the conduit (14.1) for the solvent (10.1) has a solvent pump (15.1) and the conduit (14.2) for the flocculating agent (10.2) has a flocculating agent pump (15.2) for pumping the solvent (10.1) and the flocculating agent (10.2) into the membrane reactor (6).

26. Apparatus (20) as claimed in Claim 25, **characterised in that** the solvent (10.1) in the membrane reactor (6) has a higher pressure than the flocculating agent (10.2).

27. Apparatus (20) as claimed in Claim 25 or Claim 26, **characterised in that** return conduits (16.1, 16.2) are provided for the solvent (10.1) from the membrane reactor (6) into the solvent container (12.1) and for the flocculating agent (10.2) from the membrane reactor (6) into the flocculating agent container (12.2).

28. Apparatus (20) as claimed in any one of Claims 25 to 27, **characterised in that** a solvent tempering device (18.1) and/or a solvent stirring device (19.1) are provided on the solvent container (12.1).

29. Apparatus (20) as claimed in one or several of Claims 25 to 28, **characterised in that** a flocculating agent tempering device (18.2) and/or a flocculating agent stirring device (19.2) are provided on the flocculating agent container (12.2).

30. Apparatus (20) as claimed in one or several of Claims 25 to 29, **characterised in that** a filtration device (21) is provided for precipitation of agglomerates (24) of nanoparticles (2).

31. Apparatus (20) as claimed in one or several of Claims 25 to 30, **characterised in that** a vacuum distilling apparatus (22) is provided for separation of the nanoparticles (2) from the solvent (10.1) and flocculating agent (10.2).

32. Apparatus (20) as claimed in one or several of Claims 25 to 31, **characterised in that** a gel chromatography column (23) is provided for cleaning up the nanoparticles (2).

33. Use of polymeric nanoparticles (2) which can be or are loaded with active substance and of which the polydispersity is smaller than 0.4, and which can be produced in a method as claimed in one or several of Claims 2 to 16, for controlled delivery of active substances (3) for therapeutic purposes.

## Revendications

1. Procédé de fabrication de nanoparticules (2) à partir d'un polymère (1), comportant les étapes suivantes :
- dissolution d'un polymère (1) dans un solvant (10.1) ;
- introduction du solvant (10.1), contenant le polymère dissous (1), dans un agent précipitant (10.2) pour provoquer la précipitation de nanoparticules (2),
**caractérisé en ce que** le solvant (10.1) contenant le polymère dissous (1) est envoyé à une membrane poreuse (7), et le solvant (10.1) contenant le polymère dissous (1) est introduit dans l'agent précipitant (10.2), en traversant les pores de la membrane (7), pour provoquer la précipitation de nanoparticules (2).

2. Procédé selon la revendication 1, **caractérisé en ce que** les nanoparticules (2) sont chargées d'un principe actif (3).

3. Procédé selon la revendication 2, **caractérisé en ce que**, pour le chargement des nanoparticules (2), on dissout en plus pendant la précipitation un principe actif (3) dans le solvant (10.1).

4. Procédé selon la revendication 3, **caractérisé en ce que**, pour augmenter la charge en nanoparticules (2) par le principe actif (3), on dissout en plus un émulsifiant (4) dans le solvant (10.1).

5. Procédé selon l'une des revendications 1 à 4, **caractérisé en ce que** le polymère (1) est biodégradable.

6. Procédé selon l'une des revendications 1 à 5, **caractérisé en ce que** le polymère (1) présente une masse moléculaire comprise entre 10 000 et 2 000 000 uma, en particulier entre 50 000 et 200 000 uma.

7. Procédé selon l'une ou plusieurs des revendications 1 à 6, **caractérisé en ce que** le solvant (10.1) est un solvant organique (10.1).

8. Procédé selon l'une ou plusieurs des revendications 1 à 7, **caractérisé en ce que** l'agent précipitant (10.2) contient de l'eau, ou est l'eau.

9. Procédé selon l'une ou plusieurs des revendications 1 à 8, **caractérisé en ce qu'**on ajoute à l'agent précipitant (10.2) une substance tensioactive (5), pour diminuer une agglomération des nanoparticules précipitées (2).

10. Procédé selon l'une ou plusieurs des revendications 1 à 9, **caractérisé en ce que** le solvant (10.1) contenant le polymère dissous (1) est, grâce à un gradient de pression (8), envoyé dans l'agent précipitant (10.2) en traversant la membrane poreuse (7).

11. Procédé selon l'une ou plusieurs des revendications 1 à 10, **caractérisé en ce que** le solvant (10.1) et/ou l'agent précipitant (10.2) sont portés à l'équilibre de température.

12. Procédé selon l'une ou plusieurs des revendications 1 à 11, **caractérisé en ce que** le solvant (10.1) et/ou l'agent précipitant (10.2) sont soumis à une agitation.

13. Procédé selon l'une ou plusieurs des revendications 1 à 12, **caractérisé en ce que** le solvant (10.1) contenant le polymère dissous (1) est pompé à partir d'un récipient de solvant (12.1) et l'agent précipitant (10.2) est pompé à partir d'un récipient d'agent précipitant (12.2), et ce dans deux circuits (11.1, 11.2), dans deux volumes (13.1, 13.2), séparés par la membrane poreuse (7), d'un réacteur à membrane (6), et ils sont renvoyés par pompage, respectivement dans le récipient de solvant (12.1) et dans le récipient d'agent précipitant (12.2).

14. Procédé selon l'une ou plusieurs des revendications 1 à 13, **caractérisé en ce que**, dans une étape de filtration, on isole par filtration, à partir des nanoparticules précipitées (2) dans l'agent précipitant (10.2), des agglomérats (24) de nanoparticules (2), ayant en particulier une granulométrie supérieure à 1000 nm, en particulier supérieure à 300 nm, en particulier supérieure à 60 nm.

15. Procédé selon l'une ou plusieurs des revendications 1 à 14, **caractérisé en ce que** les nanoparticules (2) sont séparées du solvant (10.1) et de l'agent précipitant (10.2) par distillation sous vide.

16. Procédé selon la revendication 15, **caractérisé en ce que** les nanoparticules (2) sont, pour purification, soumises à une chromatographie sur gel.

17. Nanoparticules polymères (2), dont la polydispersité est inférieure à 0,4, pouvant être préparées à partir d'un polymère (1) dans le cadre d'un procédé selon l'une ou plusieurs des revendications 1 à 16.

18. Nanoparticules polymères (2) selon la revendication 17, **caractérisées en ce que** les nanoparticules (2) peuvent être chargées d'un principe actif ou sont chargées d'un principe actif.

19. Nanoparticules polymères (2) selon la revendication 17 ou 18, **caractérisées en ce que** le polymère (1) des nanoparticules (2) est biodégradable, et/ou les nanoparticules polymères (2) sont biodégradables.

20. Nanoparticules polymères (2) selon l'une des revendications 17 à 19, **caractérisées en ce que** leur granulométrie moyenne est inférieure à 1000 nm, en particulier inférieure à 300 nm, en particulier inférieure à 60 nm.

21. Nanoparticules polymères (2) selon l'une ou plusieurs des revendications 17 à 20, **caractérisées en ce que** leur polydispersité est inférieure à 0,25, en particulier inférieure à 0,15.

22. Utilisation d'une membrane poreuse (7) dans le cadre d'un procédé, en particulier selon l'une ou plusieurs des revendications 1 à 16, de préparation de nanoparticules polymères (2), en particulier selon l'une ou plusieurs des revendications 17 à 21, à partir d'un polymère (1).

23. Utilisation d'une membrane poreuse (7) selon la revendication 22, **caractérisée en ce que** les nanoparticules polymères (2) peuvent être chargées d'un principe actif ou sont chargées d'un principe actif.

24. Utilisation d'une membrane poreuse (7) selon la revendication 22 ou 23, **caractérisée en ce que** le polymère (1) est biodégradable.

25. Dispositif (20) pour la préparation de nanoparticules polymères (2), en particulier selon l'une ou plusieurs des revendications 17 à 21, à partir d'un polymère (1) en particulier biodégradable, comprenant un récipient de solvant (12.1) pour un solvant (10.1), dans lequel le polymère (1) est soluble, et un récipient d'agent précipitant (12.2), qui sont reliés par des conduites (14.1, 14.2) pour le solvant et pour l'agent précipitant, à un réacteur à membrane (6) pour précipitation à l'aide d'une membrane poreuse (7), qui sépare le volume du réacteur à membrane (6) en deux volumes distincts, plus précisément un volume de rétentat (13.1) pour le solvant (10.1) contenant le polymère dissous (1) et un volume de perméat (13.2) pour l'agent précipitant (10.2) contenant les nanoparticules précipitées (2), la conduite (14.1) destinée au solvant (10.1) comportant une pompe à solvant (15.1), et la conduite (14.2) destinée à l'agent précipitant (10.2) comportant une pompe à agent précipitant (15.2), pour envoyer par pompage le solvant (10.1) et l'agent précipitant (10.2) dans le réacteur à membrane (6).

26. Dispositif (20) selon la revendication 25, **caractérisé en ce que** le solvant (10.1) présente dans le réacteur à membrane (6) une pression supérieure à celle de l'agent précipitant (10.2).

27. Dispositif (20) selon la revendication 25 ou 26, **caractérisé en ce qu'**on prévoit des conduites de retour (16.1, 16.2) pour le solvant (10.1), allant du réacteur à membrane (6) au récipient de solvant (12.1), et, pour l'agent précipitant (10.2), allant du réacteur à membrane (6) au récipient d'agent précipitant (12.2).

28. Dispositif (20) selon l'une des revendications 25 à 27, **caractérisé en ce qu'**on prévoit sur le récipient de solvant (12.1) un dispositif d'équilibrage de la température du solvant (18.1) et/ou un dispositif d'agitation du solvant (19.1).

29. Dispositif (20) selon l'une ou plusieurs des revendications 25 à 28, **caractérisé en ce qu'**on prévoit sur le récipient d'agent précipitant (12.2) un dispositif d'équilibrage de la température de l'agent précipitant (18.2) et/ou un dispositif d'agitation de l'agent précipitant (19.2).

30. Dispositif (20) selon l'une ou plusieurs des revendications 25 à 29, **caractérisé en ce qu'**on prévoit un dispositif de filtration (21), pour séparer les agglomérats (24) des nanoparticules (2).

31. Dispositif (20) selon l'une ou plusieurs des revendications 25 à 30, **caractérisé en ce qu'**on prévoit un dispositif de distillation sous vide (22) pour séparer les nanoparticules (2) du solvant (10.1) et de l'agent précipitant (10.2).

32. Dispositif (20) selon l'une ou plusieurs des revendications 25 à 31, **caractérisé en ce qu'**on prévoit pour la purification des nanoparticules (2) une colonne de chromatographie sur gel (23).

33. Utilisation de nanoparticules (2) polymères, pouvant être chargées d'un principe actif et/ou chargées d'un principe actif, dont la polydispersité est inférieure à 0,4, pouvant être préparées dans le cadre d'un procédé selon l'une ou plusieurs des revendications 2 à 16, pour l'administration contrôlée de principes actifs (3) à des fins thérapeutiques.
